(19) Europäisches Patentamt
European Patent Office
Office européen des brevets

(11) **EP 2 076 683 B1**

(12) **EUROPÄISCHE PATENTSCHRIFT**

(45) Veröffentlichungstag und Bekanntmachung des Hinweises auf die Patenterteilung:
**18.11.2009   Patentblatt 2009/47**

(21) Anmeldenummer: **07801357.0**

(22) Anmeldetag: **20.09.2007**

(51) Int Cl.:
**F16D 3/223** *(2006.01)*

(86) Internationale Anmeldenummer:
**PCT/DE2007/001696**

(87) Internationale Veröffentlichungsnummer:
**WO 2008/043334 (17.04.2008 Gazette 2008/16)**

(54) **HOMOKINETISCHES VERSCHIEBEGELENK**

HOMOKINETIC SLIDING JOINT

JOINT HOMOCINÉTIQUE COULISSANT

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **10.10.2006   DE 102006047769**
**03.03.2007   DE 102007010352**

(43) Veröffentlichungstag der Anmeldung:
**08.07.2009   Patentblatt 2009/28**

(73) Patentinhaber: **Ifa Technologies GmbH**
**39340 Haldensleben (DE)**

(72) Erfinder:
• **FROST, Sebastian**
**39590 Bindfelde (DE)**
• **SHERLOCK, John**
**Wolverhampton WVG 7NG (GB)**

(74) Vertreter: **Leinung, Günter**
**Patentanwalt,**
**Olvenstedter Strasse 15**
**39108 Magdeburg (DE)**

(56) Entgegenhaltungen:
WO-A-2005/028895         DE-A1- 19 958 147
DE-A1-102004 018 777

**Beschreibung**

Die Erfindung betrifft ein homokinetisches Verschiebegelenk für Längswellen von Kraftfahrzeugen, bestehend aus einem äußeren und inneren Gelenkkörper sowie einem Käfig, wobei zwischen den Gelenkkörpern mehrere Kugeln vorgesehen sind, jede Kugel in einer an den Gelenkkörpern vorgesehenen Bahnen/Rillen geführt und in einem Käfigfenster eines Käfigs gehalten ist und mit Hilfe der Kugeln ein Drehmoment vom äußeren Gelenkkörper auf den inneren Gelenkkörper oder vom inneren Gelenkkörper auf den äußeren Gelenkkörper übertragbar ist.

Verschiebegelenke, die in Kraftfahrzeugen zur Übertragung von Drehmomenten eingesetzt werden, sind in einer Vielzahl bekannt, die aus einem äußeren und einem inneren Gelenkkörper bestehen, die mit Bahnen/Rillen ausgeführt und in diesen Rillen Kugeln vorgesehen sind. Dabei sind die Verschiebegelenke mit Käfigen oder ohne Käfige ausgebildet, wobei die Übertragung der Drehmomente von einem zum anderen Gelenkkörper über die in den Rillen eingesetzten Kugeln erfolgt.

So beschreibt die DE 197 04 761 C2 ein Kugelgleichlaufgelenk in Form eines Verschiebegelenkes, das jeweils zwei auf dem Umfang benachbarte Kugelbahnen im Gelenkaußenteil zueinander parallele Mittellinien aufweist und äußere Bahnpaare bildet und jeweils zwei auf dem Umfang benachbarte Kugelbahnen am Gelenkinnenteil zueinander parallele Mittellinien aufweisen und innere Bahnpaare bilden, wobei jeweils äußere und innere Bahnpaare einander zugeordnet sind und gemeinsam ein Paar von Kugeln aufnehmen. Es wird ferner ausgeführt, dass jeweils zwei der Kugelbahnen im Gelenkinnenteil und im Gelenkaußenteil relativ einander angenähert werden, so dass die Käfigfenster bei vorgegebener Kugelzahl dort, wo in einem Gelenkbauteil zwei unter entgegengesetzten Kreuzungswinkeln zur Längsachse verlaufende Bahnen einander benachbart sind, in Umfangsrichtung relativ verlängert werden können und es wird als Vorteil ausgeführt, dass die vorhandene Reststegbreite zwischen den verlängerten Käfigfenstern nicht unzulässig schmal wird.

Ein axial verschiebbares Gleichlaufdrehgelenk mit einem äußeren Gelenkkörper und einem Gelenkinnenteil sowie zwischen diesen beiden Bauteilen vorgesehenen Kugeln ist mit der EP 1 039 162 A2 bekannt geworden, bei der jede Kugel in einer am Gelenkkörper vorgesehenen Bahn geführt und in einem Käfigfenster eines Käfigs gehalten ist. Zur Minimierung der Geräuschentstehung wird vorgeschlagen, dass auf der mit der Außenfläche des Käfigs in Kontakt bringbaren Innenfläche des Gelenkkörpers und/oder auf den im Wesentlichen radialen Innenseiten der Käfigfenster eine Dämpfungsschicht vorgesehen ist, mittels der das so genannte "Brummschnarren" von Gleichlaufdrehgelenken möglichst vermieden werden soll.

Bekannt sind auch käfigfreie Verschiebegelenke, wie beispielsweise in der DE 19958 147 A1 beschrieben.

Dieses Verschiebegelenk bezieht sich auf ein homokinetisches Verschiebegelenk, bestehend aus einem äußeren Gelenkstück mit innen liegenden Gelenkstückbahnen und einer inneren Nabe mit außen liegenden, die Gelenkstückbahnen kreuzenden Nabenbahnen, wobei jeweils miteinander korrespondierende Gelenkstück- und Nabenbahnen eine Laufbahn für eine kraftübertragende Kugel bilden und wobei alle Laufbahnen gegenüber jeweils der ersten Ebene einen Schrägungswinkel aufweisen, der für die zugehörige Gelenkstückbahn und für die korrespondierende Nabenbahn jeweils im Wesentlichen beitragsgleich aber gegensinnig ausgebildet ist und ferner wird beschrieben, dass einige der Laufbahnen gegenüber einer jeweils zweiten Ebene zusätzlich einen Neigungswinkel aufweisen, der für die zugehörigen Gelenkstückbahnen und für die korrespondierende Nabenbahn gleichfalls im Wesentlichen beitragsgleich, aber gegensinnig ausgebildet ist, wodurch erreicht werden soll, dass sämtliche Kugeln des Verschiebegelenkes an der Leistungsübertragung beteiligt sind.

Ein Gegenbahngelenk für große Beugewinkel ist mit der WO 2005/028895 A1 bekannt geworden, welches als Festgelenk ausgebildet ist. Mit dieser vorgestellten Lösung können Beugewinkel des Gegenbahngelenkes realisiert werden, ein Längenausgleich innerhalb des Gegenbahngelenkes ist mit dieser Lösung nicht möglich. Dies wird dadurch begründet, dass die Kugellaufbahnen, in denen die Kugeln des Gegenbahngelenkes laufen und somit eine Drehmomentenübertragung realisieren, gekrümmt verlaufend ausgebildet sind, wodurch funktionsbedingt ein Längenausgleich innerhalb des Gegenbahngelenkes nicht stattfinden kann, sondern nur eine Beugung des Gelenkes möglich ist. Nachteilig bei den beschriebenen Verschiebegelenken ist, dass zu deren Herstellung ein hoher fertigungstechnischer Aufwand erforderlich ist und das Verhältnis der Baugröße dieser Verschiebegelenke zu ihrer Übertragungsfähigkeit sehr ungünstig ausgebildet ist.

Der Erfindung liegt daher die Aufgabe zugrunde, ein mit einem Käfig ausgebildetes homokinetisches Verschiebegelenk mit geringen Abmessungen für Längswellen von Kraftfahrzeugen bereitzustellen, mit dem hohe Drehmomente und Drehzahlen übertragen werden können und die Nachteile der bekannten Lösungen weitestgehend beseitigt werden.

Erfindungsgemäß wird diese Aufgabe mit den Merkmalen des Anspruches 1 gelöst. Vorteilhafte Lösungen und besondere Ausgestaltungen sind in den Unteransprüchen angegeben.

So wurde gemäß der Erfindung ein homokinetisches Verschiebegelenk geschaffen, bei dem die beiden Teile, der äußere Gelenkkörper und der innere Gelenkkörper, mit Kugellaufbahnen ausgebildet sind, welche in wechselnder Folge in Links-Rechts-Ausbildung, am inneren/äußeren Umfang der Gelenkkörper angeordnet sind, wobei die einzelnen Kugellaufbahnen mit festlegbaren Neigungswinkeln $\beta'$ und Bahnschrägungswinkeln $\beta$ ausgebildet sind, welche in einem bestimmten Größenverhältnis zueinander stehen. So nach der Beziehung:

$$\text{Bahnschrägungswinkel } \beta \text{ zu Neigungswinkel } \beta' = 5 : 3.$$

Gemäß der Erfindung sind die Bahnschrägungswinkel β mit Werten im Bereich von 5° bis 9° und die Neigungswinkel β' mit Werten im Bereich von 3 bis 5,4° ausgebildet,

Im gefügten Zustand von äußerem und innerem Gelenkkörper, also am gefertigten Verschiebegelenk, entstehen schräge, räumlich angeordnete Kugellaufbahnen, in denen kleinere Kugeln gegenüber bekannten Verschiebegelenken mit sich kreuzenden Kugellaufbahnen einsetzbar sind, wodurch die Anzahl der Kugeln erhöht werden kann und somit eine Verringerung der Hertzschen Pressung zwischen den Kugeln und den Kugellaufbahnen erzielt wird, dabei der notwendige Steuerwinkel der Kugellaufbahnen trotz erhöhter Kugelanzahl groß genug bleibt, ohne dass die Funktion des Verschiebegelenkes beeinträchtigt wird. Die kleineren Kugeln vermindern gleichzeitig die Fliehkräfte, und somit nochmals die Hertzsche Pressung in den Kugellaufbahnen, dies bei hohen Drehzahlen.

Die in den Gelenkkörpern in wechselnder Folge vorgesehenen Kugellaufbahnen sind die Voraussetzung für deren im gefügten Zustand der Gelenkkörper sich herausbildende räumliche Schrägung. So die Grundlage gegeben ist, dass in einer bevorzugten Ausführung des Verschiebegelenkes dieses mit sechs bis acht Kugellaufbahnen ausführbar ist.

Der Käfig des Verschiebegelenkes ist mit Fenstern ausbildbar, in denen eine oder auch zwei Kugeln Aufnahme finden und in Nullstellung des Verschiebegelenkes besitzen die Kugellaufbahnen gleichgroße Längenabstände und die Bedingung:

$$L\,1 = L\,2 = L\,3 \ldots Ln$$

ist erfüllt.

Ein wesentlicher Vorteil der vorliegenden Erfindung ist, dass das Verschiebegelenk infolge der räumlichen Schrägung der vorgesehenen Kugellaufbahnen gegenüber bekannten Verschiebegelenken mit einer höheren Anzahl von Kugeln ausbildbar ist, wodurch die Laufeigenschaften verbessert, die Hertzsche Pressung verringert wird und trotz der erhöhten Kugelanzahl im Verschiebegelenk der Kreuzungswinkel der Kugellaufbahnen groß genug ist und somit auch nicht die Funktionseigenschaften des Verschiebegelenkes eingegrenzt sind. Die guten Laufeigenschaften ergeben sich aus der Paarung des äußeren Gelenkkörpers und des inneren Gelenkkörpers, welche mit räumlich entgegengesetzten Kugellaufbahnen ausgebildet sind.

Ein erfindungsgemäß ausgebildetes Verschiebegelenk besitzt einen Montagebeugewinkel bis zu 8°, einen Betriebsbeugewinkel im Bereich von 4 bis 5 °, einen Montageverschiebeweg von = > 20 mm und einen Betriebsverschiebeweg von = > 10 mm.

Mit nachfolgendem Ausführungsbeispiel soll die Erfindung näher erläutert werden, die beigefügten Zeichnungen zeigen in

Figur 1:     eine perspektivische Ansicht eines Verschiebegelenkes,

Figur 2:     eine Frontansicht des Verschiebegelenkes nach Figur 1,

Figur 3:     eine Schnittansicht B - B nach Figur 2,

Figur 4:     eine Schnittansicht A - A nach Figur 2,

Figur 5:     eine Schnittansicht C - C nach Figur 4,

Figur 6:     den äußeren Gelenkkörper in einer Schnittdarstellung,

Figur 7:     den inneren Gelenkkörper in einer Schnittansicht B-B nach Figur 9,

Figur 8:     den äußeren Gelenkkörper in der Schnittansicht A-A nach Figur 6,

Figur 9:     den inneren Gelenkkörper in einer Einzeldarstellung und

Figur 10: eine prinziphafte Darstellung des äußeren und inneren Gelenkkörpers in gestreckter Ausbildung mit der Anordnung und Ausbildung der Kugellauf- bahnen.

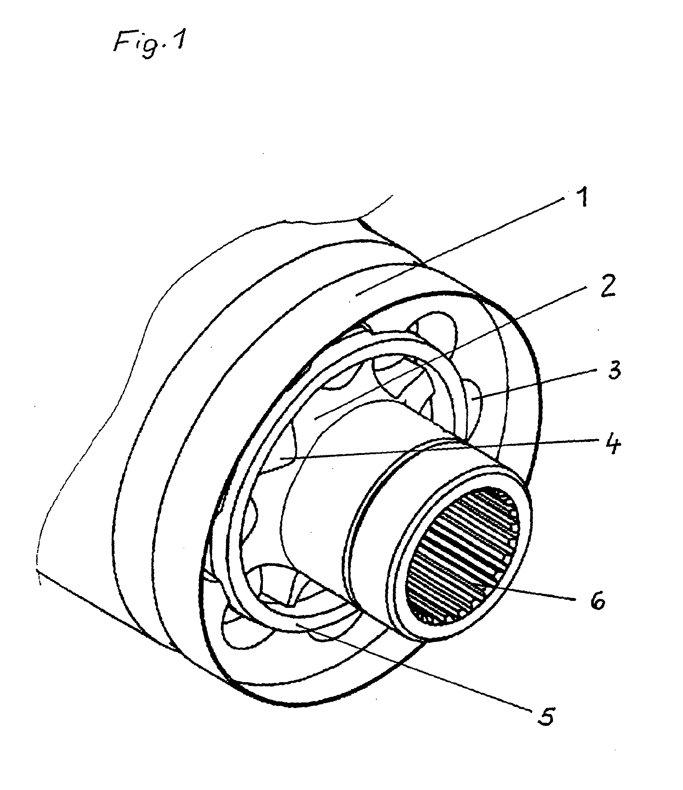

Das Ausführungsbeispiel zeigt in den Figuren 1 bis 10 ein homokinetisches Verschiebegelenk in seiner Gesamtheit, das heißt im eingebauten Zustand als auch einzelne Detail- und Schnittansichten zu Bau- und Funktionsteilen des Verschiebegelenkes.

So zeigt Figur 1 in einer perspektivischen Ansicht ein zusammengesetztes homokinetisches Verschiebegelenk, welches aus einem äußeren Gelenkkörper 1 und einem inneren Gelenkkörper 2 sowie einem zwischen diesen beiden Gelenkkörpern 1; 2 vorgesehenen Käfig 5 besteht.

An der Innenwandung des äußeren Gelenkkörpers 1 und an der Außenwandung des inneren Gelenkkörpers 2 sind diese mit Kugellaufbahnen 3; 4 ausgebildet, die im gefügten Zustand der Gelenkkörper 1; 2 schräg verlaufende und räumlich ausgebildete Kugellaufbahnen 3; 4 ergeben, in denen Kugeln 7 umlaufen, welche in den Fenstern des Käfigs 5 geführt sind.

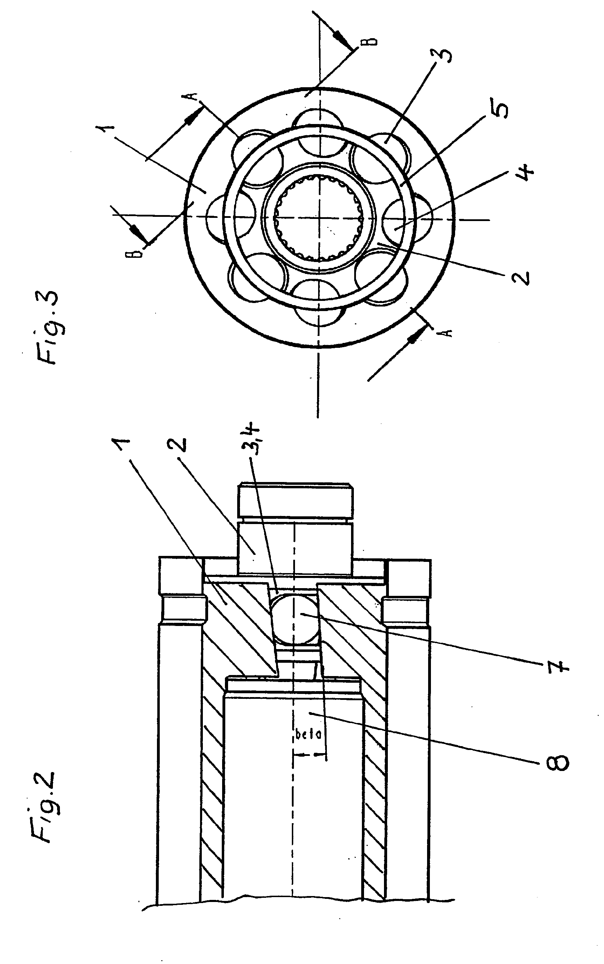

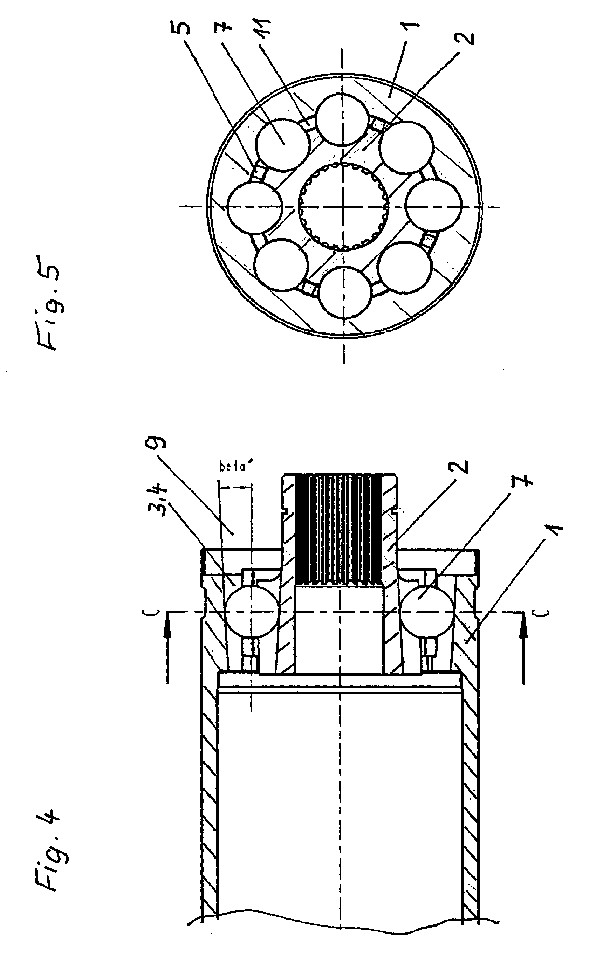

Die in den Gelenkkörper 1; 2 vorgesehenen Kugellaufbahnen 3; 4 sind in wechselnder Folge in Links-/Rechts-Ausbildung an der Innenwandung des äußeren Gelenkkörpers 1 und an der Außenwandung des inneren Gelenkkörpers 2 vorgesehen, dies unter Wahrung bzw. Festlegung eines bestimmten Neigungswinkels $\beta$' 9 und eines Bahnschrägungswinkels $\beta$ 8, wie sich aus den Ansichten der Figuren 1 und 2 ergibt und in den Figuren 3 und 4 dargestellt.

Durch die Ausbildung und Anordnung der Kugellaufbahnen 3; 4 in dem äußeren und dem inneren Gelenkkörper 1; 2, unter Beachtung bestimmter Neigungs- und Bahnschrägungswinkel 9; 8, werden die Kugellaufbahnen 3; 4 mit einer räumlichen Schrägung herausgebildet, die die Grundlage bilden, dass ein homokinetisches Verschiebegelenk mit beispielsweise acht Paarungen von Kugellaufbahnen 3; 4 ausgebildet werden kann, wie in den Figuren 1; 2 und 5 gezeigt. Diese räumliche Schrägung der Kugellaufbahnen 3; 4 ist gleichfalls die Grundlage und Voraussetzung, dass kleinere Kugeln 7 in dem Verschiebegelenk einsetzbar sind, wodurch die bereits geschilderten Vorteile in der Praxis wirksam werden, ohne dass die Beweglichkeit des homokinetischen Verschiebegelenkes eingeschränkt wird.

Die räumliche Schrägung der Kugellaufbahnen 3; 4 ergibt sich sowohl aus der in wechselnder Folge ihrer Links-Rechts-Ausbildung an den einzelnen Gelenkkörpern 1; 2 als auch aus der in wechselnder Folge verlaufenden einzelnen Bahnschrägungswinkel $\beta$ 8 und der Neigungswinkel $\beta$' 9.

Die Ausbildung und der Verlauf der Bahnschrägungswinkel $\beta$ 8 und der Neigungswinkel $\beta$' 9 ergeben sich aus den Figuren 3 bis 9, welche jeweils bestimmte Schnittansichten des Verschiebegelenkes und deren äußeren und inneren Gelenkkörper 1; 2 zeigen.

Die Schnittdarstellungen in den Figuren 3; 4 dokumentieren jeweils an einer Kugellaufbahn 3; 4 und eingesetzter Kugel 7 den Verlauf des Bahnschrägungswinkels $\beta$ 8 und des Neigungswinkels $\beta$' 9.

Die Anordnung von acht Kugeln 7 in dem Verschiebegelenk zeigt in einer Schnittansicht die Figur 5, in der auch die paarweise Anordnung von Kugeln 7 gezeigt wird. Bei dieser Ausbildung des Verschiebegelenkes ist der Käfig 5 mit vergrößerten Käfigfenstern 11 ausgebildet, so dass in diesen Käfigfenstern 11 die Kugeln 7 paarweise eingesetzt und geführt werden.

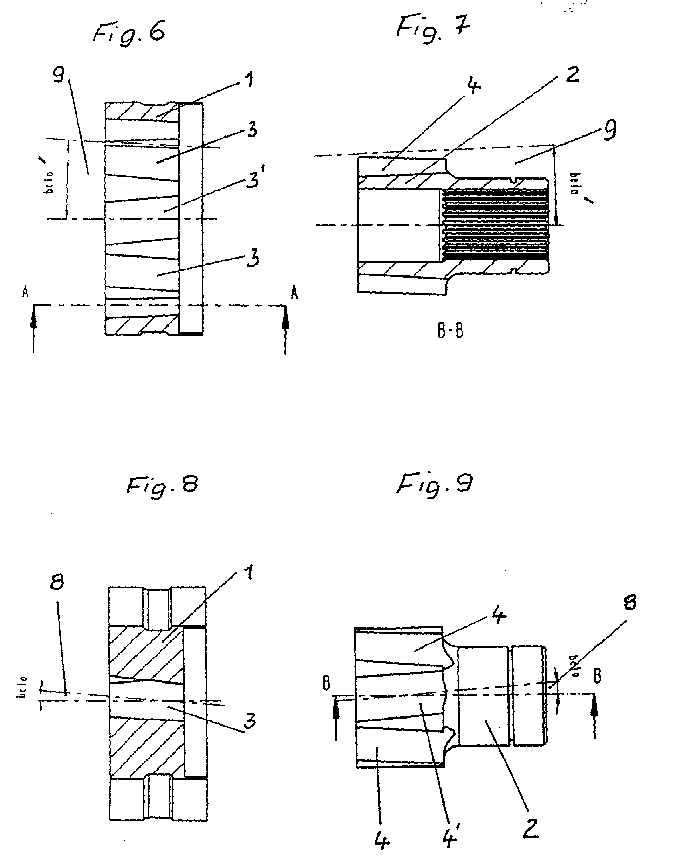

Den wechselnden Verlauf der Kugellaufbahnen 3; 4- links bzw. rechts - sowie die Ausbildung und den Verlauf der Neigungswinkel $\beta$' 9 und der Bahnschrägungswinkel $\beta$ 8 der Kugellaufbahnen 3; 4 zeigen die einzelnen Ansichten der Figuren 6 bis 9.

So ergibt sich aus der Figur 6, wie die Kugellaufbahnen 3 im äußeren Gelenkkörper 1 vorgesehen sind und unter einer bestimmten Neigung, dokumentiert durch den Neigungswinkel $\beta$' 9, verlaufen.

Die wechselnde Folge der Links-Rechts-Ausbildung der Kugellaufbahnen 3 im äußeren Gelenkkörper 1 wird durch die Kennzeichnung der Kugellaubbahnen 3 und 3' dokumentiert.

Die wechselnde oder gegenläufige Ausbildung der Neigungswinkel $\beta$' 9 im äußeren Gelenkkörper 1 und im inneren Gelenkkörper 2 ergibt sich aus den beiden Darstellungen der Figuren 6 und 7, welche im eingebauten Zustand dann den Neigungswinkel $\beta$' 9 der jeweiligen Kugellaufbahn des gesamten Verschiebegelenkes herausbilden.

In analoger Weise sind die Kugellaufbahnen 3; 4 vom äußeren und inneren Gelenkkörper 1; 2 mit dem jeweiligen Bahnschrägungswinkel $\beta$ 8 ausgebildet, wie die Figuren 8 und 9 darstellen. Aus diesen Darstellungen ergibt sich, wie die einzelnen Kugellaufbahnen 3; 4 in wechselnder Folge mit den Bahnschrägungswinkeln $\beta$ 8 ausgebildet sind, welche im weitesten Sinne einmal nach vom geneigt bzw. einmal nach hinten geneigt verlaufen und im gefügten Zustand beider Gelenkkörper 1; 2 den jeweils gemeinsamen Bahnschrägungswinkel $\beta$ 8 einer jeden Kugellaufbahn ergeben.

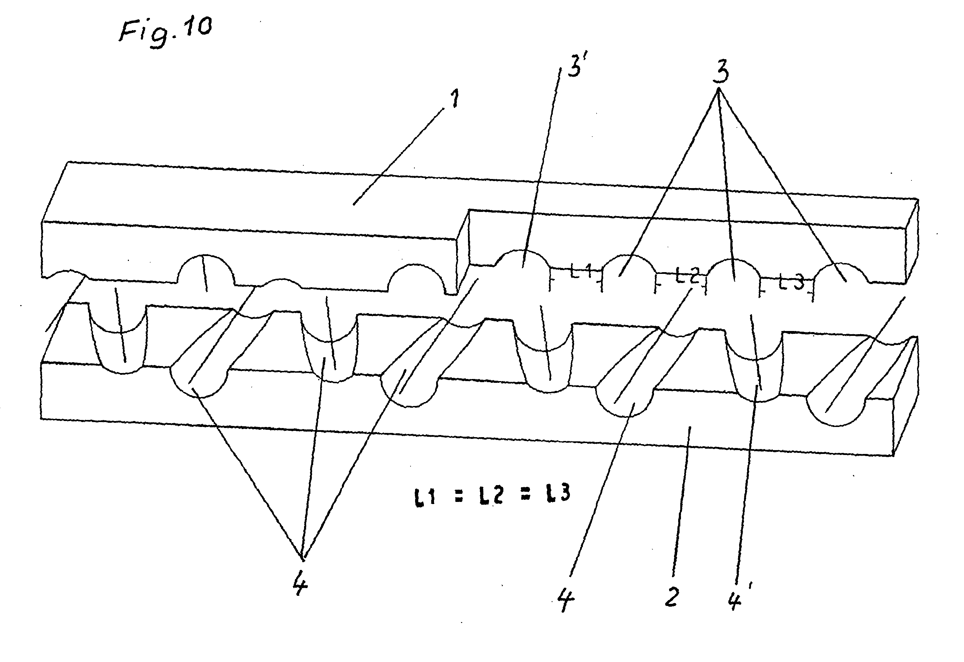

Die Ausbildung und Anordnung der einzelnen Kugellaufbahnen 3; 4 in den Gelenkkörpern 1; 2 ergibt sich aus der prinziphaften Darstellung der beiden Gelenkkörper 1; 2 gemäß der Figur 10, in der gleichfalls gezeigt wird, dass die einzelnen Kugellaufbahnen 3; 4 mit gleich großen Längsabständen zueinander ausgebildet sind, dies nach der Bedingung

$$L\,1 = L\,2 = L\,3 \ldots Ln.$$

Speziell aus der Darstellung des inneren Gelenkkörpers 2 ergeben sich die Anordnung und der Verlauf der einzelnen Kugellaufbahnen 4, wie diese längs- bzw. rechtsverlaufend im Gelenkkörper 2 angeordnet sind und jeweils einen Neigungswinkel β' 9 besitzen, welcher in wechselnder Folge einmal nach vom verlaufend und einmal nach hinten verlaufend ausgeführt ist, wie an den Kugellaufbahnen 4' dokumentiert.

Die jeweils zur Kugellaufbahn 4 vom Gelenkkörper 2 zugehörige Kugellaufbahn 3 vom Gelenkkörper 1 ist dabei entgegengesetzt ausgebildet, was bedeutet, dass die zugehörige Kugellaufbahn 3 zu einer nach vom geneigten Kugellaufbahn 4 mit einem Neigungswinkel β' 9 ausgebildet ist, der nach hinten geneigt verläuft und analog dazu der jeweilige Bahnschrägungswinkel β 8 der jeweiligen Kugellaufbahn 3 verläuft.

Die Anordnung der Laufbahnen 3; 4 in wechselnder Steigung der räumlich schrägen Kugellaufbahnen, unter gleichen Winkeln, bringt Vorteile bei der Fertigung von Verschiebegelenken und deren Einsatz in Längswellen von Kraftfahrzeugen.

So führt das jeweilige Werkzeug bei jedem Fertigungsschritt zur Herausbildung der Kugellaufbahnen die gleiche Bewegung aus. Im ersten Bearbeitungsschritt wird jeweils jede zweite Kugellaufbahn gefertigt und im zweiten Schritt wird das Werkstück umgespannt, neu positioniert und die anderen Kugellaufbahnen können gefertigt werden. Das bedeutet, dass ohne Neueinrichtung des Werkzeuges der gleiche Arbeitsvorgang nochmals ablaufen kann.

Durch die Ausbildung der Bahnschrägungswinkel β und der Neigungswinkel β' nach dem Verhältnis β : β' = 5 : 3 ist die Grundlage gegeben, ein Verschiebegelenk für Längswellen mit großen Verschiebewegen und kleinen Beugewinkeln zu schaffen und durch den Einsatz kleiner Kugeln in so hergestellten Verschiebegelenken wird bei Verringerung der Hertzschen Pressung die Übertragung der erforderlichen Drehmomente von Längswellen für Kraftfahrzeuge nicht negativ beeinflusst.

**Patentansprüche**

1. Homokinetisches Verschiebegelenk für Längswellen von Kraftfahrzeugen, bestehend aus einem äußeren und inneren Gelenkkörper (1; 2) mit ausgebildeten Kugellaufbahnen (3; 4), einem zwischen den Gelenkkörpern (1; 2) vorgesehenen Käfig (5) und in den sich aus je einer Kugellaufbahn (3; 4) vom äußeren und inneren Gelenkkörper (1; 2) herausbildendem Kugellaufbahnenpaar Kugeln (7), geführt im Käfig (5) des Verschiebegelenkes, vorgesehen sind, **dadurch gekennzeichnet, dass**

   die Kugellaufbahnen (3; 4) in Längsrichtung gerade ausgebildet sind und in wechselnder Folge, wechselnd rechts- und linkssteigend, im äußeren Gelenkkörper (1) und im inneren Gelenkkörper (2) angeordnet sind, die im gefügten Zustand der Gelenkkörper (1; 2) schräg verlaufende und räumlich angeordnete Kugellaufbahnen (3; 4) herausbilden und die einzelnen Kugellaufbahnen (3; 4) einen Bahnschrägungswinkel β (8) sowie einen Neigungswinkel β' (9) besitzen, die zueinander durch das Verhältnis

$$\beta : \beta' = 5 : 3$$

2. Verschiebegelenk nach Anspruch 1, **dadurch gekennzeichnet, dass** die Bahnschrägungswinkel β (8) mit Werten im Bereich von 5° bis 9° und die Neigungswinkel β' (9) mit Werten im Bereich von 3° bis 5,4° ausgebildet sind.

3. Verschiebegelenk nach den Ansprüchen 1 und 2, **dadurch gekennzeichnet, dass** in der Nullstellung des Verschiebegelenkes die umfänglichen Abstände der Kugellaufbahnen (3; 4) und der eingesetzten Kugeln (7) gleich groß sind und die die Bedingung L 1 = L 2 = L 3 = ... Ln erfüllt ist.

4. Verschiebegelenk nach den Ansprüchen 1 und 3, **dadurch gekennzeichnet, dass** die Gelenkkörper (1; 2) mit mehreren, vorzugsweise sechs bis acht Kugellaufbahnen (3; 4) ausgebildet sind, der Käfig (5) Käfigfenster (11) besitzt, in denen eine oder zwei Kugeln (7) Aufnahme finden.

5. Verschiebegelenk nach den Ansprüchen 1 bis 4, **dadurch gekennzeichnet, dass** im gefügten Zustand des äußeren und inneren Gelenkkörpers (1; 2) die schräg verlaufenden und räumlich ausgebildeten Kugellaufbahnen (3; 4) sich kreuzen, wobei deren räumliche Schrägung herausgebildet wird durch die wechselnde Folge ihrer Links-/Rechts-Anordnung in den Gelenkkörper (1; 2) und der in wechselnder Folge verlaufenden Bahnschrägungswinkel β (8) und Neigungswinkel β' (9).

**Claims**

1. Homokinetic slip joint for longitudinal shafts of motor vehicles consisting of an outer and an inner joint body (1; 2) with ball races (3; 4) formed in them, a cage (5) provided between the joint bodies (1; 2) and with balls (7) from the ball race pair formed by one ball race (3; 4) each from the outer and inner joint bodies (1; 2) being guided in the cage (5) of the slip joint, **characterised in that**
the ball races (3; 4) are designed straight in the longitudinal direction and arranged alternatingly on the right and left in the outer joint body (1) and in the inner joint body (2), and when the joint bodies (1; 2) are joined together form ball races (3; 4) that run obliquely and are arranged three-dimensionally with the individual ball races (3; 4) displaying a race helix angle β (8) and an angle of inclination β' (9), relating to each other in the ratio

$$\beta : \beta' = 5 : 3$$

2. Slip joint in accordance with claim 1, **characterised in that**
the race helix angles β (8) are formed in the range of 5° to 9° and the angles of inclination β' (9) are formed in the range of 3° to 5.4°.

3. Slip joint in accordance with claims 1 and 2, **characterised in that**
in the zero position of the slip joint the circumferential spacing of the ball races (3; 4) and the balls (7) inserted in them is equidistant and the condition L 1 = L 2 = L 3 = ... Ln is satisfied.

4. Slip joint in accordance with claims 1 and 3, **characterised in that**
the joint bodies (1; 2) are formed with more than one, preferably six to eight ball races (3; 4), with the cage (5) possessing a cage window (11) in which one or two balls (7) are accommodated.

5. Slip joint in accordance with claims 1 to 4, **characterised in that**
In the joined condition of the outer and inner joint bodies (1; 2) the helical and three-dimensionally formed ball races (3; 4) intersect, as a result of which their three-dimensional spiral is formed by the alternating sequence of their left and right arrangement in the joint bodies (1; 2) and the alternating race helix angle β (8) and angle of inclination β' (9).

**Revendications**

1. Joint homocinétique coulissant pour les arbres longitudinaux des véhicules, composé d'un corps articulé extérieur et intérieur (1; 2) avec des gorges à billes formées (3; 4), d'une cage (5) prévue entre les corps articulés (1; 2) et de billes (7), guidées dans la cage (5) du joint coulissant, prévues dans la paire de gorges à billes formées à partir d'une gorge à bille (3; 4) du corps articulé extérieur et intérieur (1; 2), **caractérisé par le fait que**
les gorges à billes (3; 4) sont formées dans le sens longitudinal et sont disposées dans un ordre alternant, ascendant à droite et à gauche, dans un corps articulé extérieur (1) et dans un corps articulé intérieur (2), qui forment, lorsque sont intégrés les corps articulés (1; 2), des gorges à billes (3; 4) inclinées et disposées dans l'espace et **par le fait que** les différentes gorges à billes (3; 4) comportent un angle d'hélice β (8) ainsi qu'un angle d'inclinaison β' (9), définis l'un par rapport à l'autre par le rapport

$$\beta : \beta' = 5 : 3$$

2. Joint coulissant conformément à la revendication n°1, **caractérisé par le fait que**
l'angle d'hélice P (8) est créé avec des valeurs comprises entre 5° et 9° et l'angle d'inclinaison β' (9) avec des valeurs comprises entre 3° et 5,4 °.

3.  Joint coulissant conformément aux revendications n°1 et n°2, **caractérisé par le fait que** les intervalles importants des gorges à billes (3; 4) et des billes utilisées (7) sont identiques dans la position zéro du joint coulissant et que la condition L 1 = L 2 = L 3 = ... Ln est respectée.

4.  Joint coulissant conformément aux revendications n° et n°3, **caractérisé par le fait que** les corps articulés (1; 2) sont formés avec plusieurs, de préférence entre six et huit gorges à billes (3; 4), et que la cage (5) comporte une fenêtre (11), dans laquelle sont logées une ou deux billes (7).

5.  Joint coulissant conformément aux revendications n°1 à n°4, **caractérisé par le fait que** les gorges à billes (3; 4) inclinées et formées dans l'espace se croisent lorsque sont intégrés les corps articulés extérieur et intérieur (1; 2), leur inclinaison dans l'espace étant formée par l'ordre alternant de leur disposition gauche/droite dans les corps articulés (1; 2) et par l'angle d'inclinaison β' (9) et l'angle d'hélice β (8) intervenant dans un ordre alternant.

*Fig. 1*

Fig.2

Fig.3

EP 2 076 683 B1

Fig. 4

Fig. 5

C

3,4

9

beta

2

7

1

C

5

7

11

1

2

EP 2 076 683 B1

Fig. 6

Fig. 7

B-B

Fig. 8

Fig. 9

Fig. 10

L1 = L2 = L3

EP 2 076 683 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19704761 C2
- EP 1039162 A2
- DE 19958147 A1
- WO 2005028895 A1